# EUROPÄISCHE PATENTSCHRIFT

(11) **EP 4 061 506 B1**
(45) Veröffentlichungstag und Bekanntmachung des Hinweises auf die Patenterteilung: **18.10.2023**
(21) Anmeldenummer: 20808060.6
(22) Anmeldetag: 16.11.2020
(51) Int. Cl.: B01D 46/00, B01D 46/24, B01D 46/44

(54) **LUFTFILTER MIT EINEM PRIMÄRLUFTAUSLASS UND EINEM SEKUNDÄRLUFTAUSLASS SOWIE FILTERELEMENT HIERFÜR**
AIR FILTER COMPRISING A PRIMARY AIR OUTLET AND A SECONDARY AIR OUTLET AND FILTER ELEMENT FOR SAME
FILTRE À AIR COMPRENANT UNE SORTIE D'AIR PRIMAIRE ET UNE SORTIE D'AIR SECONDAIRE ET ÉLÉMENT FILTRANT À CET EFFET

(30) Priorität: 18.11.2019 DE 102019131037
(43) Veröffentlichungstag der Anmeldung: 28.09.2022
(73) Patentinhaber: MANN+HUMMEL GmbH, 71636 Ludwigsburg (DE)
(72) Erfinder: KROHLOW, Matthias, 71083 Herrenberg (DE); SCHMID, Daniel, 74343 Sachsenheim (DE); SONNTAG, Martin, 71691 Freiberg (DE); PFANNKUCH, Steffen, 71636 Ludwigsburg (DE); SCHMID, Martin, 94419 Reisbach (DE); WITTMERS, Christoph, 74321 Bietigheim-Bissingen (DE); HASENFRATZ, Robert, 74523 Schwäbisch Hall (DE)
(74) Vertreter: Mann + Hummel Intellectual Property
(86) Internationale Anmeldenummer: PCT/EP2020/082184
(87) Internationale Veröffentlichungsnummer: WO 2021/099239

(56) Entgegenhaltungen:
- WO-A1-2012/172017
- WO-A1-2013/129999
- DE-U1-202005 003 046
- US-A1- 2018 369 732

## Beschreibung

### Technisches Gebiet

Die Erfindung betrifft einen Luftfilter mit einem Rohlufteinlass, einem Primärluftauslass und einem Sekundärluftauslass. Die Erfindung betrifft ferner ein Filterelement für einen solchen Luftfilter.

### Stand der Technik

Luftfilter mit einem Primärluftauslass und einem Sekundärluftauslass für gefilterte Luft werden beispielsweise bei Verbrennungsmotoren von Kraftfahrzeugen eingesetzt. Der Primärluftauslass dient typischerweise der Bereitstellung von (gefilterter) Reinluft zur Verwendung bei der Verbrennung in dem Verbrennungsmotor. Der Sekundärluftauslass kann beispielsweise zur Bereitstellung von (gefilterter) Reinluft zur Verwendung in einem Abgasstrang des Verbrennungsmotors dienen, insbesondere zur Abgasnachbehandlung.

Die EP 1 451 464 B1 beschreibt einen Ansaugluftfilter für eine Brennkraftmaschine, mit einem Filtergehäuse, das einen Rohlufteinlass und einen Reinluftauslass sowie einen reinseitigen Sekundärluftauslass aufweist. Der Ansaugluftfilter weist einen in dem Filtergehäuse angeordneten, radial von außen nach innen durchströmten Ringfiltereinsatz auf. Der Ringfiltereinsatz weist an einem axialen Ende eine erste Endscheibe auf, die mindestens eine Öffnung aufweist, durch die der Reinluftauslass mit einem Inneren des Ringfiltereinsatzes kommuniziert. Der Ringfiltereinsatz weist an einem von der ersten Endscheibe abgewandten axialen Ende eine zweite Endscheibe auf, die mindestens eine Öffnung aufweist, durch die der Sekundärluftauslass mit dem Inneren des Ringfiltereinsatzes kommuniziert, wobei an der zweiten Endscheibe ein Anschlussstutzen ausgebildet ist.

Ein ähnlicher Luftfilter ist auch aus der WO 2017/103048 A1 bekannt.

Die WO 2012/172017 A1 beschreibt ein Filterelement mit einem ringförmigen Filterkörper, der einen Innenraum in Umfangsrichtung umschließt. In einer Endscheibe des Filterelements ist ein Hauptanschluss, der mit dem Innenraum fluidisch verbunden ist, ausgebildet. Der Filterkörper weist einen Kanal auf, der sich axial erstreckt und der radial offen ist, wobei ein Nebenabschluss, der mit dem Innenraum fluidisch verbunden ist, im Bereich des Kanals angeordnet ist.

Es ist Aufgabe der Erfindung, einen Luftfilter mit einem Primärluftauslass und einem Sekundärluftauslass anzugeben, bei dem eine Durchströmung des Primärluftauslasses von einer Durchströmung des Sekundärluftauslasses nicht wesentlich beeinflusst wird, und der vorzugsweise anstelle eines vorhandenen Luftfilters ohne einen Sekundärluftauslass einsetzbar ist. Ferner ist es Aufgabe der Erfindung, ein Filterelement für einen solchen Luftfilter anzugeben.

### Offenbarung der Erfindung

Diese Aufgaben werden durch einen Luftfilter mit den in Anspruch 1 angegebenen Merkmalen sowie ein Filterelement gemäß Anspruch 8 gelöst. Bevorzugte Ausführungsformen sind in den jeweiligen Unteransprüchen und der Beschreibung angegeben.

### Erfindungsgemäßer Luftfilter

Erfindungsgemäß ist ein Luftfilter vorgesehen. Der Luftfilter kann insbesondere zur Versorgung eines Verbrennungsmotors mit gefilterter Verbrennungsluft dienen. Der Luftfilter weist ein Filtergehäuse mit einem Rohlufteinlass auf. Durch den Rohlufteinlass kann im Betrieb des Luftfilters zu filternde Luft in das Filtergehäuse strömen. Der Luftfilter weist ferner ein Filterelement auf. Das Filterelement ist in dem Filtergehäuse angeordnet. Das Filterelement weist einen Filtermediumkörper auf. Der Filtermediumkörper umgibt eine Längsachse des Filterelements ringförmig. Richtungsangaben, wie beispielsweise radial oder axial, beziehen sich für die Beschreibung der vorliegenden Erfindung auf die Längsachse des Filterelements. Das Filterelement bzw. dessen Filtermediumkörper trennt eine Rohseite in dem Filtergehäuse von einer Reinseite innerhalb des Filterelements. Das Filterelement ist mithin von radial außen nach radial innen durchströmbar. Die Rohseite ist mit anderen Worten zwischen dem Filterelement und dem Filtergehäuse ausgebildet. Die Rohseite und die Reinseite können auch als ein Rohraum bzw. Reinraum bezeichnet werden.

Das Filterelement weist eine erste Endscheibe auf. In der ersten Endscheibe sind erfindungsgemäß ein Primärluftdurchlass und wenigstens ein Sekundärluftdurchlass ausgebildet. Der Primärluftdurchlass ist zentral an der ersten Endscheibe angeordnet. Insbesondere kann der Primärluftdurchlass koaxial zur Längsachse angeordnet sein. Vorzugsweise ist eine Vielzahl von Sekundärluftdurchlässen in der ersten Endscheibe ausgebildet, die insbesondere ringförmig um den Primärluftdurchlass herum angeordnet sein können. Gefilterte Luft kann durch den Primärluftdurchlass und den wenigstens einen Sekundärluftdurchlass aus dem Inneren des Filterelements, d. h. von der Reinseite, herausströmen bzw. abgezogen werden.

Das Filterelement weist typischerweise eine zweite Endscheibe auf. Die Endscheiben sind an gegenüberliegenden axialen Enden des Filterelements angeordnet. Die zweite Endscheibe des Filterelements ist grundsätzlich geschlossen ausgebildet. Die erste und ggf. die zweite Endscheibe sind typischerweise stoffschlüssig mit dem Filtermediumkörper verbunden, insbesondere kann der Filtermediumkörper in das Material der Endscheiben eingebettet sein bzw. mit den Endscheiben verklebt sein. Die Endscheiben können aus Kunststoff oder einem Polyurethanschaum bestehen.

Das Filterelement des erfindungsgemäßen Luftfilters kann weitere Merkmale des unten beschriebenen, erfindungsgemäßen Filterelements aufweisen.

An dem Filtergehäuse ist ein Primärluftauslass ausgebildet. Der Primärluftauslass kommuniziert über den Primärluftdurchlass mit der Reinseite. An dem Filtergehäuse ist ferner ein Sekundärluftauslass ausgebildet. Der Sekundärluftauslass kommuniziert über den wenigstens einen Sekundärluftdurchlass mit der Reinseite. Mit anderen Worten sind der Primärluftauslass über den Primärluftdurchlass und der Sekundärluftauslass über den Sekundärluftdurchlass bzw. die Sekundärluftdurchlässe fluidisch mit der Reinseite verbunden. Im Betrieb des Luftfilters strömt typischerweise ein im Vergleich zum durch den Primärluftauslass strömenden Teil der gefilterten Reinluft kleinerer Teil der Reinluft durch den Sekundärluftauslass.

Da der Primärluftauslass und der Sekundärluftauslass erfindungsgemäß unabhängig voneinander über den Primärluftdurchlass bzw. den Sekundärluftdurchlass in der ersten Endscheibe mit gefilterter Reinluft versorgt werden, wird die Durchströmung des Primärluftauslasses nicht oder nur unwesentlich von einer Strömung von Reinluft durch den Sekundärluftauslass beeinflusst. Insbesondere kann durch die Trennung der Reinluftzufuhr zu den beiden Reinluftauslässen im Filtergehäuse mittels der separaten Reinluftdurchlässe in der ersten Endscheibe erreicht werden, dass ein Geschwindigkeitsprofil der Luftströmung im Primärluftauslass qualitativ nicht oder zumindest nicht nennenswert dadurch beeinflusst wird, ob Luft durch den Sekundärluftdurchlass und den Sekundärluftauslass strömt oder nicht bzw. wie groß ein Volumenstrom bzw. Massenstrom von Reinluft durch den Sekundärluftauslass ist.

Durch die Trennung der Reinluftauslässe am Filtergehäuse kann der Primärluftauslass unproblematisch auf eine bestehende Anschlussstruktur einer mit Reinluft zu vorsorgenden Einrichtung, beispielsweise eines Verbrennungsmotors, angepasst werden. Mit dem erfindungsgemäßen Luftfilter ist es daher möglich, eine zusätzliche Sekundärluftversorgung mit gefilterter Reinluft bereitzustellen, ohne an der (an den Primärluftauslass anzuschließenden) Anschlussstruktur zur Hauptluftversorgung der Einrichtung Änderungen vorzunehmen.

Der Sekundärluftauslass kommuniziert über einen Kanal des Filterelements, welcher den Primärluftdurchlass ringförmig koaxial umgibt, mit dem wenigstens einen Sekundärluftdurchlass. Der Kanal kann einen Strom von gefilterter Reinluft durch den Sekundärluftdurchlass unabhängig von der Position des Sekundärluftdurchlasses am Umfang der ersten Endscheibe aufnehmen. Insbesondere kann der Kanal Teilströme von gefilterter Reinluft durch mehrere, insbesondere alle, Sekundärluftdurchlässe der ersten Endscheibe vereinigen und zu dem Sekundärluftauslass leiten. Der Kanal kann ferner eine Trennung des Primärluftstroms zu dem Primärluftauslass und des Sekundärluftstroms zu dem Sekundärluftauslass sicherstellen.

Vorzugsweise ist der Kanal durch Innenwandabschnitte an der ersten Endscheibe und an dem Filtergehäuse nach radial innen begrenzt. Die Innenwandabschnitte können gegeneinander abgedichtet sein. Dadurch kann auf konstruktiv einfache Weise die Trennung des Kanals von dem Primärluftdurchlass bzw. dem Primärluftauslass eingerichtet sein. Die Innenwandabschnitte können sich in axialer Richtung erstrecken. In Sonderfällen kann nur der Innenwandabschnitt an der ersten Endscheibe oder nur der Innenwandabschnitt an dem Filtergehäuse eine Axialerstreckung aufweisen. Vorzugsweise überlappen die (sich in axialer Richtung erstreckenden) Innenwandabschnitte einander in axialer Richtung. Dies kann die Montage des Filterelements in dem Filtergehäuse vereinfachen. Zwischen den Innenwandabschnitten kann eine erste Dichtungseinrichtung angeordnet sein.

Vorzugsweise ist der Kanal durch Außenwandabschnitte an der ersten Endscheibe und an dem Filtergehäuse nach radial außen begrenzt. Die Außenwandabschnitte sind gegeneinander abgedichtet. Dadurch kann auf konstruktiv einfache Weise verhindert werden, dass ungefilterte Rohluft von der Rohseite in den reinseitigen Kanal gelangt. Die Außenwandabschnitte können sich in axialer Richtung erstrecken. In Sonderfällen kann nur der Außenwandabschnitt an der ersten Endscheibe oder nur der Außenwandabschnitt an dem Filtergehäuse eine Axialerstreckung aufweisen. Vorzugsweise überlappen die (sich in axialer Richtung erstreckenden) Außenwandabschnitte einander in axialer Richtung. Dies kann die Montage des Filterelements in dem Filtergehäuse vereinfachen. Zwischen den Außenwandabschnitten kann eine zweite Dichtungseinrichtung angeordnet sein.

Vorzugsweise weist der Luftfilter einen Luftmassenmesser auf, der mit dem Primärluftauslass verbunden ist. Der Luftmassenmesser ermöglicht die Messung des durch den Primärluftauslass strömenden Massenstroms oder in Sonderfällen Volumenstroms von gefilterter Reinluft. Insbesondere kann der Luftmassenmesser unmittelbar an dem Primärluftauslass angeordnet sein. Dies erlaubt einen in axialer Richtung besonders kompakten Bau. Da durch die erfindungsgemäße Versorgung des Sekundärluftauslasses mit gefilterter Reinluft über die Sekundärluftdurchlässe die Durchströmung des Primärluftauslasses nicht (merklich) beeinflusst wird, kann der Luftmassenmesser besonders dicht am Primärluftauslass angeordnet sein, ohne dass dessen Messergebnisse beeinträchtigt werden. Der Luftmassenmesser kann als ein Heißfilm-Luftmassenmesser ausgebildet sein.

Ein Gehäuseelement des Luftmassenmessers kann den Primärluftauslass durchragen. Der Luftfilter kann auf diese Weise in axialer Richtung noch kürzer gestaltet werden.

Ein Gehäuseelement des Luftmassenmessers kann im Bereich des Primärluftdurchlasses dichtend mit der ersten Endscheibe verbunden sein. Dies kann die Anbindung des Luftmassenmessers vereinfachen, insbesondere im Hinblick auf die Anzahl der notwendigen Dichtstellen. Vorzugsweise erfolgt die dichtende Verbindung des Gehäuseelements mit der ersten Endscheibe radial innen am Sekundärluftdurchlass. Das Gehäuseelement kann dann besonders einfach durch Einstecken in axialer Richtung an das Filterelement angeschlossen werden. Das Gehäuseelement kann dichtend mit einem an der ersten Endscheibe ausgebildeten Innenwandabschnitt des Kanals verbunden sein. Zwischen dem Gehäuseelement und der ersten Endscheibe kann ein Dichtelement angeordnet sein.

Der Sekundärluftauslass kann an einem Stutzen ausgebildet sein. Dies vereinfacht es, eine mit gefilterter Reinluft durch den Sekundärauslass zu versorgende weitere Einrichtung, beispielsweise eine Abgasnachbehandlungseinrichtung, an den Luftfilter anzuschließen. Der Stutzen erstreckt sich vorzugsweise schräg zu der Längsachse von dem Primärluftauslass weg. Dies ist für die Zugänglichkeit des Stutzens beim Anschließen der weiteren Einrichtung vorteilhaft.

### Erfindungsgemäßes Filterelement

In den Rahmen der vorliegenden Erfindung fällt ferner ein Filterelement. Das Filterelement kann insbesondere bei einem oben beschriebenen, erfindungsgemäßen Luftfilter eingesetzt werden. Das erfindungsgemäße Filterelement kann weitere Merkmale des Filterelements des oben beschriebenen, erfindungsgemäßen Luftfilters aufweisen und umgekehrt.

Der Filtermediumkörper des Filterelements weist ein Filtermedium auf, welches eine Längsachse des Filterelements ringförmig umgibt. Das Filtermedium ist von radial außen nach radial innen zu einer Reinseite in einem Bereich eines inneren Hohlraums des Filtermediumkörpers hin durchströmbar. Das Filtermedium kann aus Cellulosefasern, synthetischen Fasern, Glasfasern oder Mischmedien aus den genannten Fasertypen bestehen.

Das Filterelement weist eine erste Endscheibe auf. In der ersten Endscheibe sind erfindungsgemäß ein Primärluftdurchlass und wenigstens ein Sekundärluftdurchlass ausgebildet. Der Primärluftdurchlass ist zentral an der ersten Endscheibe angeordnet. Insbesondere kann der Primärluftdurchlass koaxial zur Längsachse angeordnet sein. Der Primärluftdurchlass und der Sekundärluftdurchlass sind jeweils zu der Reinseite hin offen. Mit anderen Worten eröffnen der Primärluftdurchlass und der Sekundärluftdurchlass jeweils einen Strömungspfad von der Reinseite zu einer Umgebung des Filterelements. Gefilterte Luft kann durch den Primärluftdurchlass und den Sekundärluftdurchlass aus dem Inneren des Filterelements, d. h. von der Reinseite, herausströmen bzw. abgezogen werden.

Erfindungsgemäß liegt der wenigstens eine Sekundärluftdurchlass radial außerhalb des Primärluftdurchlasses vor und ist als zumindest nach radial innen abgeschlossener Durchbruch der Endscheibe ausgebildet. Insbesondere verbleibt im Bereich eines Innenumfangs der Endscheibe eine umlaufende Innenkante, die den Primärluftauslass definiert.

Der wenigstens eine Sekundärluftdurchlass mündet in einen von dem Primärluftdurchlass getrennten Kanal an der ersten Endscheibe, welcher den Primärluftdurchlass ringförmig koaxial umgibt. Dies gewährleistet eine Trennung der Reinluftströme durch den Primärluftdurchlass und den wenigstens einen Sekundärluftdurchlass. Auf diese Weise kann erreicht werden, dass im Betrieb des Filterelements die Durchströmung des Primärluftdurchlasses zumindest weitgehend unabhängig von der Durchströmung des Sekundärluftdurchlasses erfolgt, insbesondere im Hinblick auf ein Geschwindigkeitsprofil.

Das Filterelement weist typischerweise eine zweite Endscheibe auf. Die Endscheiben sind an gegenüberliegenden axialen Enden des Filterelements angeordnet. Die zweite Endscheibe des Filterelements ist grundsätzlich geschlossen ausgebildet. Die erste und ggf. die zweite Endscheibe sind typischerweise stoffschlüssig mit dem Filtermediumkörper verbunden, insbesondere kann das Filtermedium des Filtermediumkörpers in das Material der Endscheiben eingebettet sein bzw. mit den Endscheiben verklebt sein. Die Endscheiben können aus einem Kunststoff oder einem Polyurethanschaum bestehen.

In einer besonders bevorzugten Ausführungsform überragt die erste Endscheibe einen Innenumfang des Filtermediumkörpers in Radialrichtung nach innen hin und bildet einen Überragungsbereich aus. Insbesondere liegt der wenigstens eine Sekundärluftdurchlass in dem Überragungsbereich vor. Der Überragungsbereich ist ein nach innen über den Innenumfang des Filtermediumkörpers überstehender Überhang, der insbesondere scheibenförmig ausgebildet ist. Man könnte auch sagen der Innendurchmesser der Endscheibe ist kleiner als ein Innendurchmesser des Filtermediumkörpers.

Die erste Endscheibe weist vorzugsweise eine Vielzahl von Sekundärluftdurchlässen auf, die ringförmig um den Primärluftdurchlass herum angeordnet sind, bevorzugt in gleichmäßigen Winkelabständen. Dadurch kann ein besonders gleichmäßiges Einströmen von gefilterter Reinluft in den Primärluftdurchlass und die Sekundärluftdurchlässe erfolgen. Insbesondere kann eine über den (Innen-)Umfang des Filtermediumkörpers gleichförmige Durchströmung erzielt werden.

Das Filtermedium kann sternförmig gefaltet sein. Dadurch kann eine wirksame Filterfläche des Filtermediums vergrößert werden, ohne die Außenabmessungen des Filterelements zu erhöhen. Vorzugsweise ist eine in radialer Richtung gemessene Faltenhöhe im Bereich der Sekundärluftdurchlässe geringer als zwischen den Sekundärluftdurchlässen. Einerseits können dadurch die Sekundärluftdurchlässe radial weiter außen angeordnet werden, um beispielsweise den Primärluftdurchlass größer auszuführen. Andererseits können dadurch die Falten zwischen den Sekundärluftdurchlässen in radialer Richtung weiter nach innen geführt werden, um die Filterfläche des Filtermediumkörpers zu vergrößern. Durch die Anordnung der Sekundärluftdurchlässe im Bereich weniger hoher Falten wird dabei gewährleistet, dass nur gefilterte Reinluft von der Reinseite zu den Sekundärluftdurchlässen gelangen kann.

Vorzugsweise ist der Kanal nach radial innen durch einen umlaufenden Innenwandabschnitt begrenzt, der in axialer Richtung von der ersten Endscheibe abragt, wobei der Innenwandabschnitt radial innerhalb des wenigstens einen Sekundärluftdurchlass der Endscheibe angeordnet ist. Der Innenwandabschnitt verläuft mithin zwischen dem wenigstens einen Sekundärluftdurchlass und dem Primärluftdurchlass. Mit anderen Worten trennt der Innenwandabschnitt den Kanal von dem Primärluftdurchlass. Im Allgemeinen umgibt der Innenwandabschnitt den Primärluftdurchlass ringförmig. Der Innenwandabschnitt ist typischerweise einstückig mit der ersten Endscheibe ausgebildet.

An dem Innenwandabschnitt der ersten Endscheibe kann eine erste Dichtungseinrichtung gehalten sein. Die erste Dichtungseinrichtung kann mit einer einstückig mit dem Innenwandabschnitt ausgeformten Dichtlippe ausgebildet sein. Vorzugsweise ist die erste Dichtungseinrichtung an den Innenwandabschnitt angespritzt. Die Endscheibe und die erste Dichtungseinrichtung sind mithin als ein Zweikomponentenbauteil ausgebildet. Dies ist im Hinblick auf die Herstellung und die Handhabung des Filterelements sowie die zuverlässige Abdichtung von Vorteil. Beim Austauschen des Filterelements wird die erste Dichtungseinrichtung mit ausgetauscht. Damit kann gewährleistet werden, dass beim Einsetzen eines neuen Filterelements in ein Filtergehäuse die Verbindung des Innenwandabschnitts der ersten Endscheibe mit dem Filtergehäuse wieder die geforderten Dichtigkeitseigenschaften aufweist.

Die erste Dichtungseinrichtung kann zumindest eine nach radial außen weisende Dichtfläche, vorzugsweise zur Abdichtung gegenüber einem den Kanal begrenzenden Innenwandabschnitt eines Filtergehäuses, und/oder eine nach radial innen weisende Dichtfläche, vorzugsweise zur Abdichtung gegenüber einem Gehäuseelement eines Luftmassenmessers, aufweisen. Die radial inneren und/oder äußeren Dichtflächen der ersten Dichtungseinrichtung sind insbesondere auf den jeweiligen inneren und/oder äußeren Mantelflächen des Innenwandabschnitts der Endscheibe angeordnet. Die nach radial innen bzw. radial außen weisenden Dichtflächen können als ein einstückiges Dichtelement der ersten Dichtungseinrichtung ausgebildet sein. Alternativ können die nach radial innen bzw. radial außen weisenden Dichtflächen an voneinander separaten Dichtelementen der ersten Dichtungseinrichtung ausgebildet sein. Das einstückige Dichtelement bzw. die separaten Dichtelemente können an den Innenwandabschnitt angespritzt sein. Das Dichtelement kann bzw. die Dichtelemente können aus einem Elastomer bestehen. Ferner kann vorgesehen sein, dass die zumindest eine radial innere und/oder äußere Dichtfläche mehrere Dichtlippen aufweist.

Vorzugsweise ist der Kanal nach radial außen durch einen umlaufenden Außenwandabschnitt begrenzt, der in axialer Richtung von der ersten Endscheibe abragt. Der Außenwandabschnitt verläuft mithin radial außerhalb des wenigstens einen Sekundärluftdurchlasses und ist um ein vorbestimmtes Maß radial von dem Innenwandabschnitt beabstandet. Vorzugsweise umgibt der Außenwandabschnitt den wenigstens ein Sekundärluftdurchlass (und den Primärluftdurchlass) ringförmig. Der Außenwandabschnitt ist typischerweise einstückig mit der ersten Endscheibe ausgebildet. Mittels des Außenwandabschnitts kann bei in einem Filtergehäuse montiertem Filterelement eine Rohseite von dem reinseitigen Kanal getrennt werden.

An dem Außenwandabschnitt der ersten Endscheibe kann eine zweite Dichtungseinrichtung gehalten sein. Die zweite Dichtungseinrichtung kann mit einer einstückig mit dem Außenwandabschnitt ausgeformten Dichtlippe ausgebildet sein. Vorzugsweise ist die zweite Dichtungseinrichtung an den Außenwandabschnitt angespritzt. Die Endscheibe und die zweite Dichtungseinrichtung sind mithin als ein Zweikomponentenbauteil ausgebildet. Dies ist im Hinblick auf die Herstellung und die Handhabung des Filterelements sowie die zuverlässige Abdichtung von Vorteil. Beim Austauschen des Filterelements wird die zweite Dichtungseinrichtung mit ausgetauscht. Damit kann gewährleistet werden, dass beim Einsetzen eines neuen Filterelements in ein Filtergehäuse die Verbindung des Außenwandabschnitts der ersten Endscheibe mit dem Filtergehäuse wieder die geforderten Dichtigkeitseigenschaften aufweist. Die zweite Dichtungseinrichtung weist zumindest eine nach radial außen und/oder nach radial innen weisende Dichtfläche auf, vorzugsweise zur Abdichtung gegenüber einem Außenwandabschnitt eines Filtergehäuses, aufweisen.

Schließlich kann noch vorgesehen sein, dass der Innenwandabschnitt wenigstens teilweise in dem Überragungsbereich der ersten Endscheibe angeordnet ist. Wie weiter oben bereits beschrieben, überragt der Überragungsbereich der ersten Endscheibe den Filtermediumkörper bezüglich seines Innenumfangs und bildet gewissermaßen einen "Überhang" aus. Ist der Innenwandabschnitt nun in dem Überragungsbereich angeordnet, so bedeutet dies, dass der umlaufende Innenwandabschnitt auf einem Durchmesser, der kleiner ist als ein Innendurchmesser des Filtermediumkörpers verläuft. Hierdurch wird eine besonders gute und druckverlustarme fluidische Verbindung des Sekundärluftdurchlasses mit der Reinseite im Bereich des Hohlraums des Filtermediumkörpers ermöglicht.

### Kurze Beschreibung der Zeichnungen

Weitere Merkmale und Vorteile der Erfindung ergeben sich aus der nachfolgenden detaillierten Beschreibung eines Ausführungsbeispiels der Erfindung, aus den Patentansprüchen sowie anhand der Figuren der Zeichnung, die erfindungsgemäße Einzelheiten zeigen. Die zuvor genannten und noch weiter ausgeführten Merkmale können je einzeln für sich oder zu mehreren in beliebigen, zweckmäßigen Kombinationen bei Varianten der Erfindung verwirklicht sein. Die in der Zeichnung gezeigten Merkmale sind derart dargestellt, dass die erfindungsgemäßen Besonderheiten deutlich sichtbar gemacht werden können.

In der Zeichnung zeigen:

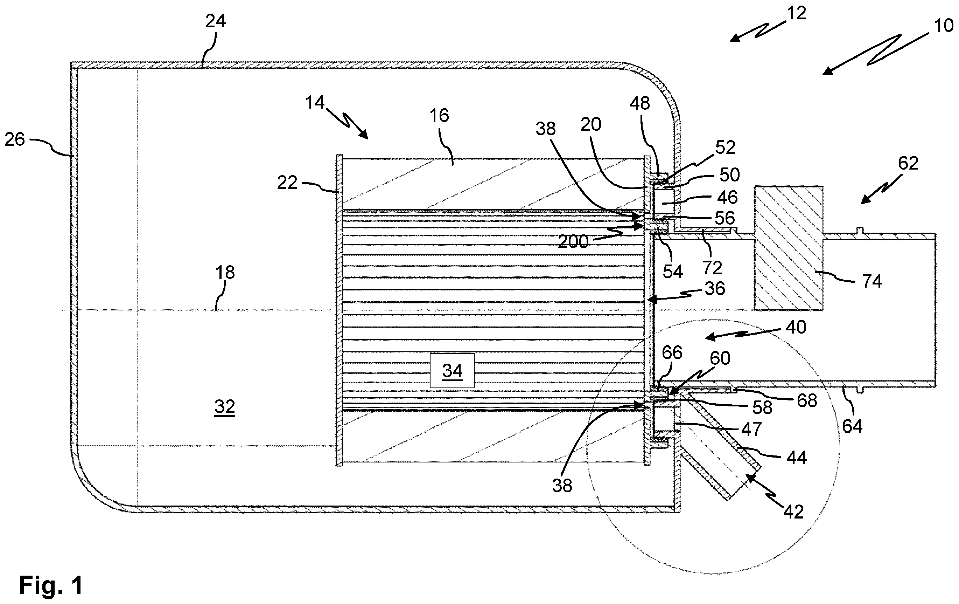

- Fig. 1: einen erfindungsgemäßen Luftfilter mit einem erfindungsgemäßen ringförmigen Filterelement, das eine erste Endscheibe mit einem zentralen Primärluftdurchlass und einer Vielzahl von ringförmig um den Primärluftdurchlass herum angeordneten Sekundärluftdurchlässen aufweist, und mit einem Filtergehäuse an dem ein zentraler Primärluftauslass sowie ein exzentrisch angeordneter Sekundärluftauslass ausgebildet sind, wobei der Primärluftauslass mit dem Primärluftdurchlass kommuniziert und der Sekundärluftauslass über ein ringförmigen Kanal mit den Sekundärluftdurchlässen kommuniziert, in einer schematischen Schnittansicht;
- Fig. 2: den Luftfilter von Figur 1 in einer schematischen Explosionsdarstellung;
- Fig. 3: ein Detail aus Figur 1 im Bereich der Verbindung des Filterelements mit dem Filtergehäuse und mit einem Luftmassenmesser;
- Fig. 4: den Luftfilter von Figur 1 in einer schematischen Ansicht mit Blick entlang einer Längsachse des Filterelements.

### Ausführungsform der Erfindung

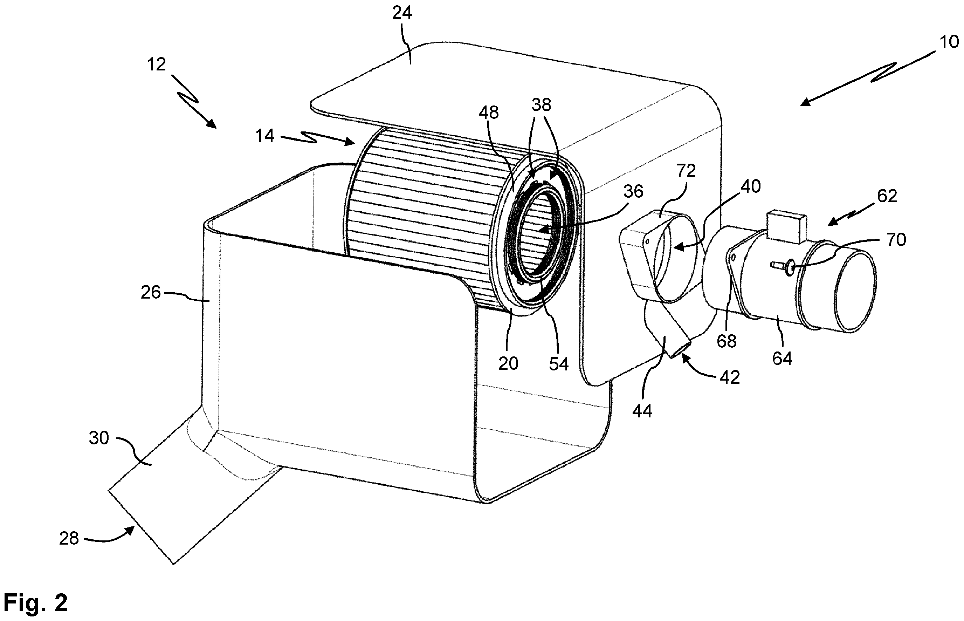

**Figur 1** zeigt einen Luftfilter 10 in einer Schnittansicht. In **Figur 2** ist der Luftfilter 10 in einer Explosionsdarstellung gezeigt.

Der Luftfilter 10 weist ein Filtergehäuse **12** auf. In dem Filtergehäuse 12 ist ein Filterelement **14** angeordnet. Das Filterelement 14 weist einen Filtermediumkörper **16** auf. Der Filtermediumkörper 16 umgibt eine Längsachse **18** des Filterelements 14 ringförmig. Das Filterelement 14 ist von radial außen nach radial innen durchströmbar. Das Filtermedium 16 ist hier sternförmig gefaltet ausgebildet. An axialen Enden des Filterelements 14 sind eine erste Endscheibe **20** und eine zweite Endscheibe **22** mit dem Filtermediumkörper 16 verbunden.

Das Filtergehäuse 12 weist hier ein erstes Gehäuseteil **24** und ein zweites Gehäuseteil **26** auf. Für einen Betrieb des Luftfilters 10 sind das erste Gehäuseteil 24 und das zweite Gehäuseteil 26 aneinander befestigt, vergleiche Figur 1, beispielsweise miteinander verrastet. Zum Austauschen des Filterelements 14 können die beiden Gehäuseteil 24, 26 voneinander gelöst werden.

Das Filtergehäuse 12 weist einen Rohlufteinlass **28** auf. Der Rohlufteinlass 28 ist hier als ein Stutzen **30** an dem zweiten Gehäuseteil 26 ausgebildet, siehe Figur 2. Innerhalb des Filtergehäuses 12 trennt das Filterelement 14 eine Rohseite **32** von einer Reinseite **34**. Die Rohseite 32 ist der Raum außerhalb des Filterelements 14. Die Reinseite 32 ist der Raum innerhalb des Filtermediumkörpers 16 und zwischen den Endscheiben 20, 22. Die zweite Endscheibe 22 ist zur Trennung der Rohseite 32 von der Reinseite 34 geschlossen ausgebildet. Die Rohseite 32 kann auch als ein Rohraum und die Reinseite 34 als ein Reinraum bezeichnet werden. Im Betrieb des Luftfilters 10 strömt zu filternde Rohluft durch den Rohlufteinlass 34 auf die Rohseite 32. Von der Rohseite 32 strömt die Luft durch das Filtermedium 16 und gelangt als gefilterte Reinluft auf die Reinseite 34.

Die erste Endscheibe 20 weist ein Primärluftdurchlass **36** auf. Der Primärluftdurchlass 36 kann zentral an der ersten Endscheibe 20 ausgebildet sein. Hier ist der Primärluftdurchlass 36 koaxial zu Längsachse 18 des Filterelements 14 angeordnet.

Die erste Endscheibe 20 weist ferner eine Vielzahl von Sekundärluftdurchlässen 38 auf. Die Sekundärluftdurchlässe **38** sind hier ringförmig um den Primärluftdurchlass 36 herum angeordnet. Mit anderen Worten umgeben die Sekundärluftdurchlässe 38 den Primärluftdurchlass 36 radial außen.

Der Primärluftdurchlass 36 und die Sekundärluftdurchlässe 38 sind jeweils als Durchbrüche in der ersten Endscheibe 20 ausgebildet. Der Primärluftdurchlass 36 und die Sekundärluftdurchlässe 38 eröffnen jeweils einen Strömungspfad von der Reinseite 34 zu einer Umgebung des Filterelements 14. Die Sekundärluftdurchlässe 38 (und mithin auch der Primärluftdurchlass 36) sind hier radial innerhalb des Filtermediumkörpers 16 angeordnet. In einer nicht näher dargestellten Ausführungsform des Luftfilters 10 könnten einzelne Falten des sterngefalteten Filtermediums 16 zwischen benachbarten Sekundärluftdurchlässen 38 in radialer Richtung über die Sekundärluftdurchlässe 38 hinaus zur Längsachse 18 hin ragen. Die Falten zwischen den Sekundärluftdurchlässen 38 weisen in diesem Fall eine größere - in radialer Richtung gemessene - Faltenhöhe auf als Falten, deren Umfangsposition mit einem der Sekundärluftdurchlässe 38 übereinstimmt.

An dem Filtergehäuse 12 ist ein Primärluftauslass **40** ausgebildet. Der Primärluftauslass 40 kommuniziert über den Primärluftdurchlass 36 mit der Reinseite 34. Mit anderen Worten ist der Primärluftauslass 40 über den Primärluftdurchlass 36 fluidisch mit der Reinseite 34 verbunden. Im Betrieb des Luftfilters 10 strömt typischerweise ein wesentlicher Teil der gefilterten Reinluft von der Reinseite 34 durch den Primärluftdurchlass 36 und den Primärluftauslass 40 aus dem Luftfilter 10 heraus.

An dem Filtergehäuse 12 ist weiterhin ein Sekundärluftauslass **42** ausgebildet. Der Sekundärluftauslass 42 kann an einem Stutzen **44** vorgesehen sein. Der Stutzen 44 des Sekundärluftauslasses 42 erstreckt sich hier schräg von der Längsachse 18 weg. Der Sekundärluftauslass 42 kommuniziert über die Sekundärluftdurchlässe 38 mit der Reinseite 34. Mit anderen Worten ist der Sekundärluftauslass 42 über die Sekundärluftdurchlässe 38 fluidisch mit der Reinseite 34 verbunden. Im Betrieb des Luftfilters 10 kann ein typischerweise kleinerer Teil der gefilterten Reinluft von der Reinseite 34 durch die Sekundärluftdurchlässe 38 und den Sekundärluftauslass 42 aus dem Luftfilter 10 heraus strömen.

Zur fluidischen Verbindung des Sekundärluftauslasses 42 mit den Sekundärluftdurchlässen 38 ist ein Kanal **46** vorgesehen. Die Sekundärluftdurchlässe 38 münden hier allesamt in den Kanal 46. Der Kanal 46 umgibt den Primärluftdurchlass 36 bzw. den Primärluftauslass 40 ringförmig. Der Kanal 46 bewirkt eine Trennung eines Primärluftstroms von gefilterter Reinluft durch den Primärluftdurchlass 36 und den Primärluftauslass 40 von einem Sekundärluftstrom von gefilterter Reinluft durch die Sekundärluftdurchlässe 38 und den Sekundärluftauslass 42.

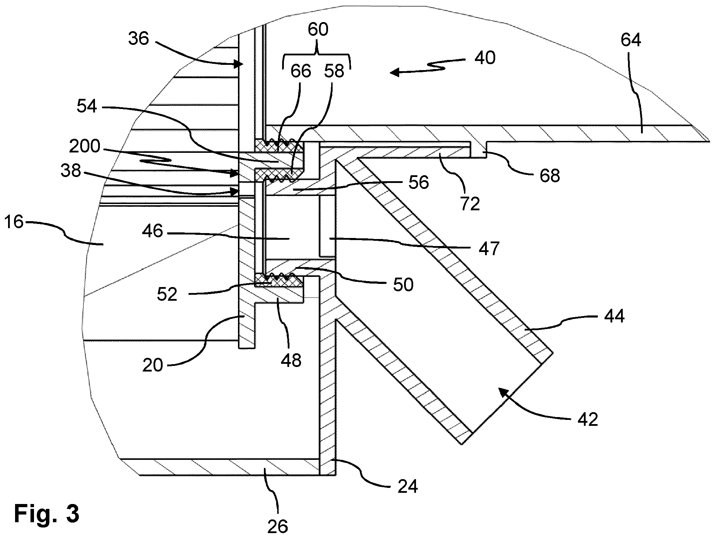

In axialer Richtung von dem Filterelement 14 weg kann der Kanal 46 durch eine Gehäusewand des Filtergehäuses 12, hier des ersten Gehäuseteils 24, begrenzt sein. In der Gehäusewand kann ein Durchbruch **47** ausgebildet sein, welcher den Kanal 46 mit dem Sekundärluftauslass 42 fluidisch verbindet, vergleiche auch **Figur 3**. In axialer Richtung zum Filtermedium 16 hin kann der Kanal 46 durch die erste Endscheibe 20 begrenzt sein.

Nach radial außen kann der Kanal 46 durch Außenwandabschnitte **48, 50** an der ersten Endscheibe 20 bzw. dem Filtergehäuse 12 begrenzt sein. Der Außenwandabschnitt 48 ist hier einstückig mit der ersten Endscheibe 20 ausgebildet. Der Außenwandabschnitt 48 steht in axialer Richtung über einen sich senkrecht zur Längsachse 18 erstreckenden Teil der ersten Endscheibe 20 vor. Mit anderen Worten ragt der Außenwandabschnitt 48 in axialer Richtung von der ersten Endscheibe 20 ab. Der Außenwandabschnitt 50 steht hier in axialer Richtung von dem ersten Gehäuseteil 24 ins Innere des Filtergehäuses 12 vor. Mit anderen Worten ragt der Außenwandabschnitt 50 in axialer Richtung von dem Filtergehäuse 12, hier dessen erstem Gehäuseteil 24, ab.

Die Außenwandabschnitte 48, 50 können einander in axialer Richtung überlappen. Hier ist der Außenwandabschnitt 48 der ersten Endscheibe 20 radial außerhalb des Außenwandabschnitts 50 des Filtergehäuses 12 angeordnet.

Zwischen den Außenwandabschnitten 48, 50 kann eine Dichtungseinrichtung **52** angeordnet sein. Die Dichtungseinrichtung 52 kann an dem Außenwandabschnitt 48 der ersten Endscheibe 20 gehalten sein. Hier ist die Dichtungseinrichtung 52 an den Außenwandabschnitt 48 angespritzt. Die erste Endscheibe 20 und die Dichtungseinrichtung 52 bilden mithin ein Zweikomponentenbauteil. Alternativ kann die Dichtungseinrichtung 52 als an dem Außenwandabschnitt 48 gehaltene, separate Dichtungseinrichtung, z.B. O-Ring, ausgeführt sein. Weiter alternativ (figurativ nicht gezeigt) kann die Dichtungseinrichtung 52 an dem gehäuseseitigen Außenwandabschnitt 50 gehalten sein.

Nach radial innen kann der Kanal 46 durch Innenwandabschnitte **54, 56** an der ersten Endscheibe 20 bzw. dem Filtergehäuse 12 begrenzt sein. Der Innenwandabschnitt 54 ist hier einstückig mit der ersten Endscheibe 20 ausgebildet. Der Innenwandabschnitt 54 steht in axialer Richtung über einen sich senkrecht zur Längsachse 18 erstreckenden Teil der ersten Endscheibe 20 vor. Mit anderen Worten ragt der Innenwandabschnitt 54 in axialer Richtung von der ersten Endscheibe 20 ab. Der Innenwandabschnitt 56 steht hier in axialer Richtung von dem ersten Gehäuseteil 24 ins Innere des Filtergehäuses 12 vor. Mit anderen Worten ragt der Innenwandabschnitt 56 in axialer Richtung von dem Filtergehäuse 12, hier dessen erstem Gehäuseteil 24, ab. Der Innenwandabschnitt 54 der ersten Endscheibe 20 kann den Primärluftdurchlass 36 von dem Kanal 46 trennen.

Die Innenwandabschnitte 54, 56 können einander in axialer Richtung überlappen. Hier ist der Innenwandabschnitt 54 der ersten Endscheibe 20 radial innerhalb des Innenwandabschnitts 56 des Filtergehäuses 12 angeordnet. Somit verlaufen beim dargestellten Luftfilter 10 der Außenwandabschnitt 50 und der Innenwandabschnitt 56 des Filtergehäuses 12 zwischen dem Außenwandabschnitt 48 und dem Innenwandabschnitt 54 des Filterelements 14.

Zwischen den Innenwandabschnitten 54, 56 kann ein erster Dichtabschnitt **58** einer Dichtungseinrichtung **60** angeordnet sein. Die Dichtungseinrichtung 60 kann an dem Innenwandabschnitt 54 der ersten Endscheibe 20 gehalten sein. Hier ist die Dichtungseinrichtung 60 bzw. der Dichtabschnitt 58 an den Innenwandabschnitt 54 angespritzt. Auch insofern bilden die erste Endscheibe 20 und die Dichtungseinrichtung 60 (und die Dichtungseinrichtung 52, vergleiche oben) ein Zweikomponentenbauteil. Alternativ kann die Dichtungseinrichtung 60 als an dem Innenwandabschnitt 54 gehaltene, separate Dichtungseinrichtung, z.B. O-Ring, ausgeführt sein.

Der Luftfilter 10 kann einen Luftmassenmesser **62** aufweisen. Der Luftmassenmesser 62 ist mit dem Primärluftauslass 40 fluidisch verbunden. Der Luftmassenmesser 62 dient zur Messung eines Massenstroms von gefilterter Reinluft durch den Primärluftauslass 40. Ein Gehäuseelement **64** des Luftmassenmessers 62 kann den Primärluftauslass 36 durchragen. Das Gehäuseelement 64 ist hier dichtend mit der ersten Endscheibe 20 verbunden. Bei der dargestellten Ausführungsform des Luftfilters 10 erstreckt sich das Gehäuseelement 64 bis in den Primärluftdurchlass 36 hinein. In axialer Richtung überlappen der Innenwandabschnitt 54 der ersten Endscheibe 20 und das Gehäuseelement 64 des Luftmassenmessers 62 einander. Zwischen der ersten Endscheibe 20, hier deren Innenwandabschnitt 54, und dem Gehäuseelement 64 kann ein zweiter Dichtabschnitt **66** der Dichtungseinrichtung 60 angeordnet sein. Auch der zweite Dichtabschnitt 66 ist hier an den Innenwandabschnitt 54 angespritzt. Vorliegend sind die beiden Dichtabschnitte 58, 66 der Dichtungseinrichtung 60 separat voneinander ausgebildet. In einer nicht näher dargestellten alternativen Ausführungsform könnte die Dichtungseinrichtung 60 ein einstückiges Dichtelement aufweisen, an dem die beiden Dichtabschnitte 58, 60 ausgebildet sind.

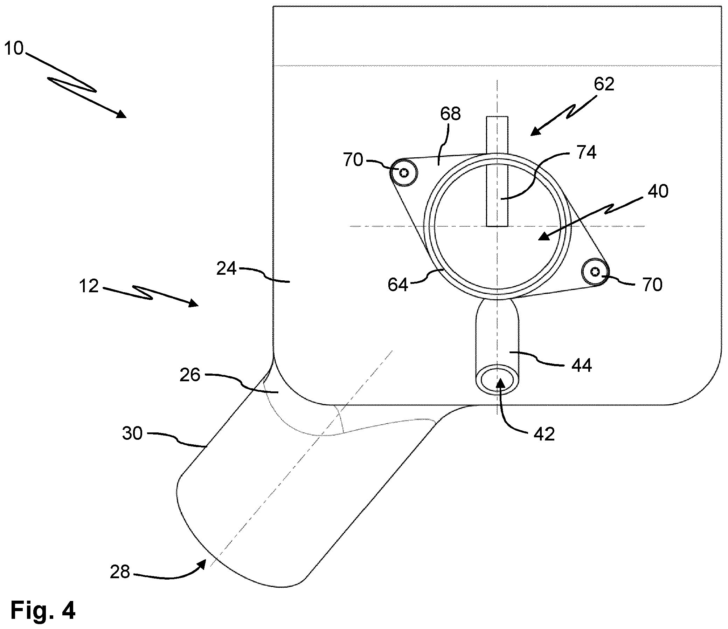

Um eine definierte Einstecktiefe des Gehäuseelements 64 in das Filtergehäuse 12 einzurichten, kann ein Anschlag **68** an dem Gehäuseelement 64 ausgebildet sein. Mittels zweier den Anschlag 68 durchgreifender Schrauben **70** kann der Luftmassenmesser 62 an dem Filtergehäuse 12, hier dessen erstem Gehäuseteil 24 fixiert sein, vergleiche Figur 2 und insbesondere **Figur 4****.** Die Schrauben 70 greifen hier in einen den Primärluftauslass 40 umgebenden Stutzen **72** ein.

Der Luftmassenmesser 62 kann als ein Heißfilm-Luftmassenmesser mit einem (stark abstrahiert dargestellten) Hitzdrahtanemometer **74** ausgebildet sein. Insbesondere in den Figuren 1 und 4 ist zu erkennen, dass sich das Hitzdrahtanemometer 74 in das Gehäuseelement 64 des Luftmassenmessers 62 hinein erstreckt. Die Messgenauigkeit von Hitzdrahtanemometern hängt von der Art der Anströmung bzw. einem Geschwindigkeitsprofil des vorbeiströmenden Luftmassenstroms ab. Eine Veränderung der Anströmung bzw. des Geschwindigkeitsprofils führt zu abweichenden Messergebnissen. Durch die erfindungsgemäße Anbindung des Sekundärluftauslasses 42 an die Reinseite 34 mittels der ringförmig um den Primärluftdurchlass 36 herum angeordneten Sekundärluftdurchlässe 38, welche in den gemeinsamen Kanal 46 münden, kann erreicht werden, dass die Durchströmung des Luftmassenmessers 62 von der Menge der durch den Sekundärluftauslass 46 abgezogenen Reinluft nicht merklich beeinflusst wird. Der erfindungsgemäße Luftfilter 10 gewährleistet daher eine besonders präzise Messung des Luftmassenstroms durch den Primärluftauslass 42.

## Patentansprüche

1. Luftfilter (10) aufweisend
- ein Filtergehäuse (12) mit einem Rohlufteinlass (28) und
- ein Filterelement (14), das in dem Filtergehäuse (12) angeordnet ist und das einen Filtermediumkörper (16) aufweist, welches eine Längsachse (18) des Filterelements (14) ringförmig umgibt, wobei der Filtermediumkörper (16) eine Rohseite (32) in dem Filtergehäuse (12) von einer Reinseite (34) innerhalb des Filterelements (14) trennt,
wobei das Filterelement (14) eine erste Endscheibe (20) mit einem zentralen Primärluftdurchlass (36) und wenigstens einem Sekundärluftdurchlass (38) aufweist,
wobei an dem Filtergehäuse (12) ein Primärluftauslass (40) ausgebildet ist, der über den Primärluftdurchlass (36) mit der Reinseite (34) des Filterelements (14) kommuniziert,
und wobei an dem Filtergehäuse (12) ein Sekundärluftauslass (42) ausgebildet ist, der über den Sekundärluftdurchlass (38) mit der Reinseite (34) des Filterelements (14) kommuniziert,
wobei der wenigstens eine Sekundärluftdurchlass (38) radial außerhalb des Primärluftdurchlasses (36) vorliegt und als zumindest nach radial innen abgeschlossener Durchbruch der ersten Endscheibe (20) ausgebildet ist, und wobei der Sekundärluftauslass (42) über einen Kanal (46) des Filterelements (14), welcher den Primärluftdurchlass (36) ringförmig koaxial umgibt, mit dem wenigstens einen Sekundärluftdurchlass (38) kommuniziert.

2. Luftfilter (10) nach Anspruch 1, **dadurch gekennzeichnet, dass** der Kanal (46) durch Innenwandabschnitte (54, 56) einerseits an der ersten Endscheibe (20) und andererseits an dem Filtergehäuse (12) nach radial innen begrenzt ist, wobei die Innenwandabschnitte (54, 56) gegeneinander abgedichtet sind, vorzugsweise wobei die Innenwandabschnitte (54, 56) einander in axialer Richtung überlappen.

3. Luftfilter (10) nach Anspruch 1 oder 2, **dadurch gekennzeichnet**, das der Kanal (46) durch Außenwandabschnitte (48, 50) einerseits an der ersten Endscheibe (20) und andererseits an dem Filtergehäuse (12) nach radial außen begrenzt ist, die gegeneinander abgedichtet sind, vorzugsweise wobei die Außenwandabschnitte (48, 50) einander in axialer Richtung überlappen.

4. Luftfilter (10) nach einem der vorhergehenden Ansprüche weiterhin aufweisend einen Luftmassenmesser (62), der mit dem Primärluftauslass (40) verbunden ist.

5. Luftfilter (10) nach Anspruch 4, **dadurch gekennzeichnet, dass** ein Gehäuseelement (64) des Luftmassenmessers (62) den Primärluftauslass (40) durchragt.

6. Luftfilter (10) nach Anspruch 4 oder 5, **dadurch gekennzeichnet, dass** ein Gehäuseelement (64) des Luftmassenmessers (62) im Bereich des Primärluftdurchlasses (36), insbesondere radial innerhalb des Sekundärluftdurchlasses (42), dichtend mit der ersten Endscheibe (20) verbunden ist.

7. Luftfilter (10) nach einem der vorhergehenden Ansprüche, **dadurch gekennzeichnet, dass** der Sekundärluftauslass (42) an einem Stutzen (44) ausgebildet ist, vorzugsweise wobei sich der Stutzen (44) schräg zu der Längsachse (18) von dem Primärluftauslass (40) weg erstreckt.

8. Filterelement (14), insbesondere für einen Luftfilter (10) nach einem der vorhergehenden Ansprüche,
mit einem Filtermediumkörper (16), welcher eine Längsachse (18) des Filterelements (14) ringförmig umgibt, wobei der Filtermediumkörper (16) von radial außen nach radial innen zu einer Reinseite (34) innerhalb des Filterelements (14) in einem Bereich eines inneren Hohlraums des Filtermediumkörpers (16) durchströmbar ist,
wobei das Filterelement (14) eine erste Endscheibe (20) mit einem zentralen Primärluftdurchlass (36) und wenigstens einem Sekundärluftdurchlass (38) aufweist,
wobei der wenigstens eine Sekundärluftdurchlass (38) radial außerhalb des Primärluftdurchlasses (36) vorliegt und als zumindest nach radial innen abgeschlossener Durchbruch der Endscheibe (20) ausgebildet ist, wobei der wenigstens eine Sekundärluftdurchlass (38) in einen von dem Primärluftdurchlass (36) getrennten Kanal (46) an der ersten Endscheibe (20) mündet, welcher den Primärluftdurchlass (36) ringförmig koaxial umgibt.

9. Filterelement nach Anspruch 8, **dadurch gekennzeichnet, dass** die erste Endscheibe (20) einen Innenumfang des Filtermediumkörpers (16) in Radialrichtung nach innen hin überragt und einen Überragungsbereich (200) ausbildet, wobei insbesondere der wenigstens eine Sekundärluftdurchlass (38) in dem Überragungsbereich (200) vorliegt.

10. Filterelement (14) nach einem der Ansprüche 8 oder 9, **dadurch gekennzeichnet, dass** die erste Endscheibe (20) eine Vielzahl von Sekundärluftdurchlässen (38) aufweist, die ringförmig um den Primärluftdurchlass (36) herum angeordnet sind, insbesondere in gleichmäßigen Winkelabständen.

11. Filterelement (14) nach einem der Ansprüche 8 bis 10, **dadurch gekennzeichnet, dass** der Filtermediumkörper (16) ein sternförmig gefaltetes Filtermedium (16) aufweist, vorzugsweise wobei eine in radialer Richtung gemessene Faltenhöhe im Bereich der Sekundärluftdurchlässe (38) geringer ist als zwischen den Sekundärluftdurchlässen.

12. Filterelement (14) nach einem der Ansprüche 8 bis 11, **dadurch gekennzeichnet, dass** der Kanal (46) nach radial innen durch einen umlaufenden Innenwandabschnitt (54) begrenzt ist, der in axialer Richtung von der ersten Endscheibe (20) abragt, wobei der Innenwandabschnitt (54) radial innerhalb des wenigstens einen Sekundärluftdurchlass (38) der Endscheibe (20) angeordnet ist.

13. Filterelement (14) nach Anspruch 12, **dadurch gekennzeichnet, dass** an dem Innenwandabschnitt (54) der ersten Endscheibe (20) eine erste Dichtungseinrichtung (60) gehalten ist, vorzugsweise an den Innenwandabschnitt (54) angespritzt ist.

14. Filterelement (14) nach Anspruch 13, **dadurch gekennzeichnet, dass** die erste Dichtungseinrichtung (60) zumindest eine radial innere Dichtfläche auf einer radial inneren Mantelfläche des Innenwandabschnitts (54) sowie zumindest eine radial äußere Dichtfläche auf einer äußeren Mantelfläche des Innenwandabschnitts (54) bereitstellt.

15. Filterelement (14) nach einem der Ansprüche 8 bis 14, **dadurch gekennzeichnet, dass** der Kanal (46) nach radial außen durch einen umlaufenden Außenwandabschnitt (48) begrenzt ist, der in axialer Richtung von der ersten Endscheibe (20) abragt und der in Radialrichtung um ein vorbestimmtes Maß von dem Innenwandabschnitt (54) beabstandet ist.

16. Filterelement (14) nach Anspruch 15, **dadurch gekennzeichnet, dass** an dem Außenwandabschnitt (48) der ersten Endscheibe (20) eine zweite Dichtungseinrichtung (52) gehalten ist, vorzugsweise an den Außenwandabschnitt (48) angespritzt ist, wobei bevorzugt die zweite Dichtungseinrichtung (52) zumindest eine radial innere und/oder zumindest eine radial äußere Dichtfläche an einer radial inneren und/oder radial äußeren Mantelfläche des Außenwandabschnitts (48) bereitstellt.

17. Filterelement (14) nach einem der Ansprüche 12 bis 16, **dadurch gekennzeichnet, dass** der Innenwandabschnitt (54) wenigstens teilweise in dem Überragungsbereich (200) der ersten Endscheibe (20) angeordnet ist.

## Claims

1. Air filter (10) featuring
- a filter housing (12) having a raw air intake (28) and
- a filter element (14) disposed in the filter housing (12) and featuring a filter medium body (16) which surrounds a longitudinal axis (18) of the filter element (14) in a ring-shaped manner, wherein the filter medium body (16) separates a raw side (32) in the filter housing (12) from a clean side (34) inside the filter element (14),
wherein the filter element (14) features a first end disc (20) having a central primary air passage (36) and at least one secondary air passage (38), wherein a primary air outlet (40), which communicates via the primary air passage (36) with the clean side (34) of the filter element (14), is provided at the filter housing (12),
and wherein a secondary air outlet (42), which communicates via the secondary air passage (38) with the clean side (34) of the filter element (14), is provided at the filter housing (12),
wherein the at least one secondary air passage (38) is present radially outside the primary air passage (36) and is designed as an opening of the first end disc (20) closed at least radially inwardly, and wherein the secondary air outlet (42) communicates via a port (46) of the filter element (14) with the at least one secondary air passage (38), said secondary air outlet surrounding the primary air passage (36) coaxially in a ring-shaped manner.

2. Air filter (10) according to claim 1, **characterized in that** the port (46) is delimited radially inwardly thanks to inner wall portions (54, 56) on the one hand at the first end disc (20) and on the other hand at the filter housing (12), wherein the inner wall portions (54, 56) are sealed against each other, preferably wherein the inner wall portions (54, 56) overlap each other in the axial direction.

3. Air filter (10) according to claim 1 or 2, **characterized in that** the port (46) is delimited radially outwardly thanks to outer wall portions (48, 50) on the one hand at the first end disc (20) and on the other hand at the filter housing (12) which are sealed against each other, preferably wherein the outer wall portions (48, 50) overlap each other in the axial direction.

4. Air filter (10) according to one of the preceding claims, further featuring a mass air flow meter (62) connected to the primary air outlet (40).

5. Air filter (10) according to claim 4, **characterized in that** a housing element (64) of the mass air flow meter (62) penetrates the primary air outlet (40).

6. Air filter (10) according to claim 4 or 5, **characterized in that** a housing element (64) of the mass air flow meter (62) is sealingly connected to the first end disc (20) in the area of the primary air passage (36), in particular radially inside the secondary air passage (42).

7. Air filter (10) according to one of the preceding claims, **characterized in that** the secondary air outlet (42) is provided on a pipe connection (44), preferably wherein the pipe connection (44) extends away from the primary air outlet (40) obliquely to the longitudinal axis (18).

8. Filter element (14), in particular for an air filter (10) according to one of the preceding claims,
having a filter medium body (16) which surrounds a longitudinal axis (18) of the filter element (14) in a ring-shaped manner, wherein the filter medium body (16) can be flowed through from radially outwardly to radially inwardly to a clean side (34) inside the filter element (14) in the area of an inner hollow space of the filter medium body (16),
wherein the filter element (14) features a first end disc (20) having a central primary air passage (36) and at least one secondary air passage (38), wherein the at least one secondary air passage (38) is present radially outside the primary air passage (36) and is designed as an opening of the end disc (20) closed at least radially inwardly, wherein the at least one secondary air passage (38 ) ends in a port (46) separated from the primary air passage (36) at the first end disc (20), said secondary air passage surrounding the primary air passage (36) coaxially in a ring-shaped manner.

9. Filter element according to claim 8, **characterized in that** the first end disc (20) projects inwardly in the radial direction beyond an inner circumference of the filter medium body (16) and forms a protruding region (200), wherein in particular the at least one secondary air passage (38) is present in the protruding region (200).

10. Filter element (14) according to one of the claims 8 or 9, **characterized in that** the first end disc (20) features a plurality of secondary air passages (38) disposed around the primary air passage (36) in a ring-shaped manner, in particular at regular angular distances.

11. Filter element (14) according to one of the claims 8 to 10, **characterized in that** the filter medium body (16) features a star-shaped folded filter medium (16), preferably wherein a fold height measured in the radial direction in the area of the secondary air passages (38) is less than between the secondary air passages.

12. Filter element (14) according to one of the claims 8 to 11, **characterized in that** the port (46) is delimited radially inwardly by a circumferential inner wall portion (54) projecting in the axial direction from the first end disc (20), wherein the inner wall portion (54) is disposed radially inside the at least one secondary air passage (38) of the end disc (20).

13. Filter element (14) according to claim 12, **characterized in that** a first sealing means (60) is held on the inner wall portion (54) of the first end disc (20), preferably injection-molded on the inner wall portion (54).

14. Filter element (14) according to claim 13, **characterized in that** the first sealing means (60) provides at least one radially inner sealing surface on a radially inner circumferential surface of the inner wall portion (54) and at least one radially outer sealing surface on an outer circumferential surface of the inner wall portion (54).

15. Filter element (14) according to one of the claims 8 to 14, **characterized in that** the port (46) is delimited radially outwardly by a circumferential outer wall portion (48) which projects in the axial direction from the first end disc (20) and which is spaced apart in the radial direction from the inner wall portion (54) by a predetermined amount.

16. Filter element (14) according to claim 15, **characterized in that** a second sealing means (52) is held at the outer wall portion (48) of the first end disc (20), preferably injection-molded onto the outer wall portion (48), wherein preferably the second sealing means (52) provides at least one radially inner and/or at least one radially outer sealing surface at a radially inner and/or radially outer circumferential surface of the outer wall portion (48).

17. Filter element (14) according to one of the claims 12 to 16, **characterized in that** the inner wall portion (54) is disposed at least partially in the protruding region (200) of the first end disc (20).

## Revendications

1. Filtre à air (10) présentant
- un boîtier de filtre (12) ayant une entrée d'air brut (28) et
- un élément filtrant (14) qui est disposé dans le boîtier de filtre (12) et qui présente un corps de milieu filtrant (16) qui entoure de manière annulaire un axe longitudinal (18) de l'élément filtrant (14), dans lequel le corps de milieu filtrant (16) sépare un côté brut (32) dans le boîtier de filtre (12) d'un côté pur (34) à l'intérieur de l'élément filtrant (14),
dans lequel l'élément filtrant (14) présente un premier disque d'extrémité (20) ayant un passage d'air primaire central (36) et au moins un passage d'air secondaire (38),
dans lequel une sortie d'air primaire (40) communiquant avec le côté pur (34) de l'élément filtrant (14) par l'intermédiaire du passage d'air primaire (36) est réalisée sur le boîtier de filtre (12),
et dans lequel une sortie d'air secondaire (42) communiquant avec le côté pur (34) de l'élément filtrant (14) par l'intermédiaire du passage d'air secondaire (38) est réalisée sur le boîtier de filtre (12),
dans lequel le passage d'air secondaire (38), au moins au nombre d'un, se trouve radialement à l'extérieur du passage d'air primaire (36) et est conçu en tant que passage du premier disque d'extrémité (20) fermé au moins radialement vers l'intérieur, et dans lequel la sortie d'air secondaire (42) communique avec le passage d'air secondaire (38), au moins au nombre d'un, par un conduit (46) de l'élément filtrant (14) qui entoure coaxialement le passage d'air primaire (36) de manière annulaire.

2. Filtre à air (10) selon la revendication 1, **caractérisé en ce que** le conduit (46) est délimité radialement vers l'intérieur par des sections de paroi intérieure (54, 56) d'une part sur le premier disque d'extrémité (20) et d'autre part sur le boîtier de filtre (12), dans lequel les sections de paroi intérieure (54, 56) sont étanches l'une par rapport à l'autre, de préférence dans lequel les sections de paroi intérieure (54, 56) se chevauchent mutuellement dans le sens radial.

3. Filtre à air (10) selon la revendication 1 ou 2, **caractérisé en ce que** le conduit (46) est délimité radialement vers l'extérieur par des sections de paroi extérieure (48, 50) d'une part sur le premier disque d'extrémité (20) et d'autre part sur le boîtier de filtre (12), qui sont étanches l'une par rapport à l'autre, de préférence dans lequel les sections de paroi extérieure (48, 50) se chevauchent mutuellement dans le sens radial.

4. Filtre à air (10) selon l'une quelconque des revendications précédentes, présentant en outre un débitmètre d'air (62) qui est relié à la sortie d'air primaire (40).

5. Filtre à air (10) selon la revendication 4, **caractérisé en ce qu'**un élément de boîtier (64) du débitmètre d'air (62) pénètre la sortie d'air primaire (40).

6. Filtre à air (10) selon la revendication 4 ou 5, **caractérisé en ce qu'**un élément de boîtier (64) du débitmètre d'air (62) est relié de manière étanche au premier disque d'extrémité (20) dans la zone du passage d'air primaire (36), notamment radialement à l'intérieur du passage d'air secondaire (42).

7. Filtre à air (10) selon l'une quelconque des revendications précédentes, **caractérisé en ce que** la sortie d'air secondaire (42) est réalisée sur une tubulure (44), de préférence dans lequel la tubulure (44) s'étend obliquement par rapport à l'axe longitudinal (18) en s'éloignant de la sortie d'air primaire (40).

8. Élément filtrant (14), notamment pour un filtre à air (10) selon l'une quelconque des revendications précédentes,
ayant un corps de milieu filtrant (16) qui entoure de manière annulaire un axe longitudinal (18) de l'élément filtrant (14), dans lequel le corps de milieu filtrant (16) peut être traversé de l'extérieur dans le sens radial vers l'intérieur dans le sens radial vers un côté pur (34) à l'intérieur de l'élément filtrant (14) dans une zone d'un espace creux intérieur du corps de milieu filtrant (16),
dans lequel l'élément filtrant (14) présente un premier disque d'extrémité (20) ayant un passage d'air primaire central (36) et au moins un passage d'air secondaire (38),
dans lequel le passage d'air secondaire (38), au moins au nombre d'un, se trouve radialement à l'extérieur du passage d'air primaire (36) et est conçu en tant que passage du disque d'extrémité (20) fermé au moins radialement vers l'intérieur, dans lequel le passage d'air secondaire (38), au moins au nombre d'un, qui entoure coaxialement le passage d'air primaire (36) de manière annulaire, débouche dans un conduit (46) séparé du passage d'air primaire (36) au niveau du premier disque d'extrémité (20).

9. Elément filtrant selon la revendication 8, **caractérisé en ce que** le premier disque d'extrémité (20) dépasse une circonférence intérieure du corps de milieu filtrant (16) dans la direction radiale vers l'intérieur et forme une zone en saillie (200), dans lequel notamment le passage d'air secondaire (38), au moins au nombre d'un, se trouve dans la zone en saillie (200).

10. Élément filtrant (14) selon l'une quelconque des revendications 8 ou 9, **caractérisé en ce que** le premier disque d'extrémité (20) présente une pluralité de passages d'air secondaires (38) disposés de manière annulaire autour du passage d'air primaire (36), notamment à des distances angulaires régulières.

11. Élément filtrant (14) selon l'une quelconque des revendications 8 à 10, **caractérisé en ce que** le corps de milieu filtrant (16) présente un milieu filtrant plié en étoile (16), de préférence dans lequel une hauteur de plis mesurée dans le sens radial est plus faible au niveau des passages d'air secondaires (38) qu'entre les passages d'air secondaires.

12. Élément filtrant (14) selon l'une quelconque des revendications 8 à 11, **caractérisé en ce que** le conduit (46) est délimité radialement vers l'intérieur par une section de paroi intérieure périphérique (54) faisant saillie axialement à partir du premier disque d'extrémité (20), dans lequel la section de paroi intérieure (54) est disposée radialement à l'intérieur du passage d'air secondaire (38), au moins au nombre d'un, du disque d'extrémité (20).

13. Elément filtrant (14) selon la revendication 12, **caractérisé en ce qu'**un premier dispositif d'étanchéité (60) est supporté sur la section de paroi intérieure (54) du premier disque d'extrémité (20), de préférence moulé par injection sur la section de paroi intérieure (54).

14. Elément filtrant (14) selon la revendication 13, **caractérisé en ce que** le premier dispositif d'étanchéité (60) fournit au moins une surface d'étanchéité radialement intérieure sur une surface circonférentielle radialement intérieure de la section de paroi intérieure (54) et au moins une surface d'étanchéité radialement extérieure sur une surface circonférentielle extérieure de la section de paroi intérieure (54).

15. Élément filtrant (14) selon l'une quelconque des revendications 8 à 14, **caractérisé en ce que** le conduit (46) est délimité radialement vers l'extérieur par une section de paroi extérieure périphérique (48) qui fait saillie dans le sens axial depuis le premier disque d'extrémité (20) et qui est espacée dans le sens radial d'une distance prédéterminée de la section de paroi intérieure (54).

16. Elément filtrant (14) selon la revendication 15, **caractérisé en ce qu'**un second dispositif d'étanchéité (52) est maintenu sur la section de paroi extérieure (48) du premier disque d'extrémité (20), de préférence moulé par injection sur la section de paroi extérieure (48), dans lequel, de manière préférée le second dispositif d'étanchéité (52) met à disposition au moins une surface d'étanchéité radialement intérieure et/ou au moins une surface circonférentielle radialement extérieure sur une surface circonférentielle radialement intérieure et/ou radialement extérieure de la section de paroi extérieure (48).

17. Élément filtrant (14) selon l'une quelconque des revendications 12 à 16, **caractérisé en ce que** la section de paroi intérieure (54) est au moins partiellement disposée dans la zone en saillie (200) du premier disque d'extrémité (20).
